# EUROPÄISCHE PATENTSCHRIFT

(11) **EP 2 053 417 B1**
(45) Veröffentlichungstag und Bekanntmachung des Hinweises auf die Patenterteilung: **27.04.2011**
(21) Anmeldenummer: 08014032.0
(22) Anmeldetag: 05.08.2008
(51) Int. Cl.: G01S 7/481, G01S 17/48

(54) **Optoelektronischer Sensor zum Nachweis von Objekten in einem Überwachungsbereich**
Optoelectronic sensor for detecting objects in a surveillance range
Capteur optoélectronique destiné au contrôle d'objets dans une zone de surveillance

(30) Priorität: 24.10.2007 DE 202007014849 U
(43) Veröffentlichungstag der Anmeldung: 29.04.2009
(73) Patentinhaber: Pepperl + Fuchs GmbH, 68307 Mannheim (DE)
(72) Erfinder: Jurgeit, Ralph-Rainer, 16356 Ahrensfelde OT Eiche (DE); Nutz, Karl, 15370 Petershagen (DE); Bartsch, Stephan, 12207 Berlin (DE); Langer, Christian, 12623 Berlin (DE); Schubert, Manfred, 14480 Potsdam (DE)
(74) Vertreter: Schiffer, Axel Martin

(56) Entgegenhaltungen:
- DE-A1- 19 721 105
- JP-A- 10 170 655
- US-A- 5 376 790
- US-A1- 2006 050 263

## Beschreibung

Die vorliegende Erfindung bezieht sich auf einen optoelektronischen Sensor zum Nachweis von Objekten in einem Überwachungsbereich nach dem Oberbegriff des Anspruchs 1.

Ein gattungsgemäßer optischer Sensor ist beispielsweise aus DE 197 21 105 C2 bekannt und weist folgende Komponenten auf: einen Sender zum Aussenden eines Sendelichtbündels in den Überwachungsbereich, einen Empfänger zum Nachweis eines Empfangslichtbündels aus dem Überwachungsbereich, wobei das Empfangslichtbündel abhängig von einem Abstand des nachzuweisenden Objekts von dem optoelektronischen Sensor relativ zum Sendelichtbündel einen veränderlichen Strahlwinkel einnimmt, und eine Steuer- und Auswerteeinheit zum Verarbeiten von Messdaten des Empfängers und zum Ausgeben eines Schaltsignals, wenn ein Objekt im Überwachungsbereich erkannt wurde.

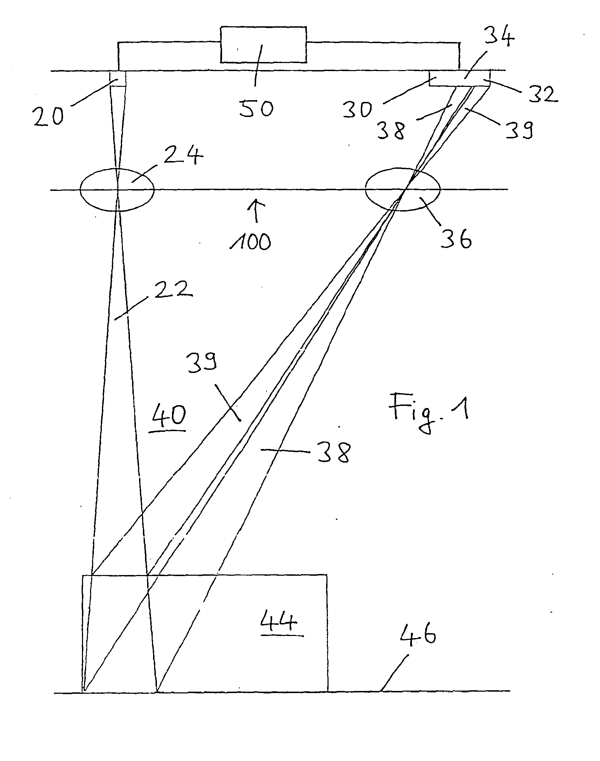

Die Arbeitsweise solcher optischen Sensoren, die auch als Triangulationssensoren bezeichnet werden, wird mit Bezug auf Figur 1 erläutert. Ein optischer Sender 20 erzeugt über eine Sendeoptik 24 ein Sendelichtbündel 22, das auf einem Hintergrund 46 ein Bild des Senders 20 erzeugt. Dieses Bild wird über ein Empfangslichtbündel 38 über eine Optik 36 auf einen positionsempfindlichen Empfänger 30 abgebildet. Dieser Empfänger 30 gibt entsprechend der nachgewiesenen Position der Abbildung ein Signal ab, das durch eine nachgeschaltete Auswerteeinheit 50 weiter verarbeitet wird. Da die Abbildung des Sendelichtbündels 22 auf dem Hintergrund 46 und somit auch auf dem Empfänger 30 ausgedehnt ist, wird die Position der Abbildung üblicherweise durch den Intensitätsschwerpunkt in der Abbildung definiert.

Wenn nun ein Objekt 44 in den Strahlengang, also den Überwachungsbereich 40, eingeschoben wird, erscheint die Abbildung des Senders 20 auf der Oberfläche des Objekts 44 und wird von dort aus über ein winkelmäßig im Vergleich zum Empfangslichtbündel 38 nach außen gekipptes Empfangslichtbündel 39 auf einen Nahbereich 32 des Empfängers 30 abgebildet. Wie aus Figur 1 ersichtlich wird im Vergleich dazu das Empfangslichtbündel 38, welches von einer Streuung oder Reflexion unmittelbar vom Hintergrund 46 herrührt, auf den Empfänger 30 weiter links, im sogenannten Fernbereich 34 abgebildet.

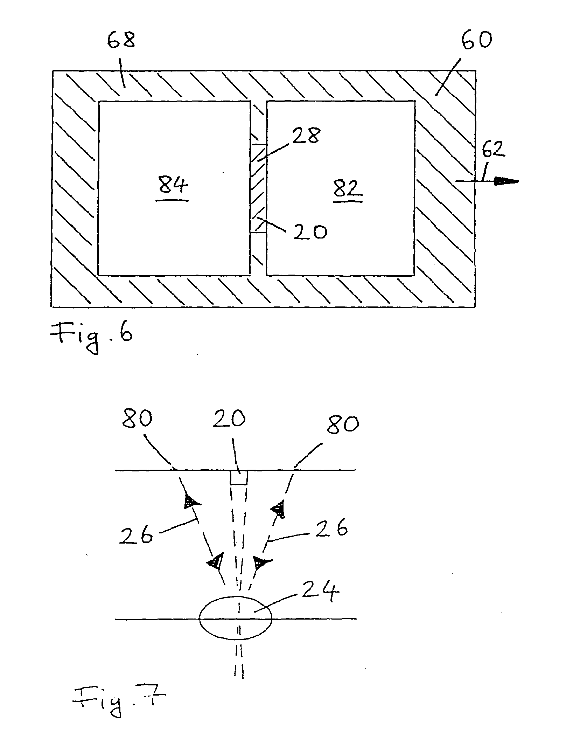

Der Sender 20 beleuchtet nun abhängig von seiner konkreten Ausführung nicht nur den Hintergrund 46 oder ein nachzuweisendes Objekt, sondern auch seine unmittelbare Umgebung. Diese Situation wird im Zusammenhang mit Figur 7 näher erläutert. Eine Beleuchtung der unmittelbaren Umgebung des Senders 20 kann beispielsweise durch eine direkte Bestrahlung von Kanten des Senders 20 und/oder durch indirekte Bestrahlung durch Oberflächen des optischen Systems zustande kommen. Zum Beispiel kann ein kleiner Anteil der in Richtung der Sendeoptik 24 gesandten Strahlung von dieser Sendeoptik 24 in Richtung von Bereichen 80 in der Nachbarschaft des Senders 20 reflektiert werden. Die Strahlung, die bei Rückreflexion oder Rückstreuung von den Bereichen 80 ebenfalls durch die Sendeoptik 24 in den Nachweisbereich 40 eintreten kann, ist in Figur 7 mit Doppelpfeilen 26 gekennzeichnet. Die Bereiche 80 in der Nachbarschaft des Senders 20 werden demgemäß ebenfalls auf das Empfangselement 30 abgebildet und beeinflussen so den Intensitätsschwerpunkt der Abbildung. Wenn die Oberflächen des beleuchteten Hintergrunds 46 oder des beleuchteten nachzuweisenden Objekts 44 Bereiche verschiedener Rückstrahlung oder Remission aufweisen, dann wird aufgrund der örtlich schwankenden Remission des Streulichts der Intensitätsschwerpunkt der Abbildung auf dem Empfänger 30 abhängig von der jeweiligen Verteilung des Remissionsgrads der Oberfläche verschoben. Dadurch kann es zu einer Fehlinformation über die Entfernung kommen, was wiederum dazu führen kann, dass an Stelle des Hintergrunds 46 ein Objekt 44 im Vordergrund detektiert wird, das in Wirklichkeit nicht vorhanden ist. Oder es kann an Stelle eines tatsächlich vorhandenen Objekts 44 ein Hintergrund detektiert werden.

Durch Streulicht aus der Umgebung des Senders kann demnach die Tastweite des Triangulationssensors in undefinierter Weise verändert werden. Diesen unerwünschten Effekt kann man vermindern, indem man die Umgebung schwärzt. Alternativ oder ergänzend kann durch einen seitlichen Verschluss des Senderbauteils ein Austritt von Kantenstrahlung vermieden werden oder es können schließlich oberhalb des Bauteils Blenden angebracht werden, welche das durch die Bauteilumgebung ausgesandte Streulicht zurückhalten sollen.

Mit diesen bekannten Lösungen wird das Problem zwar zum Teil gemindert, jedoch nicht beseitigt.

In US 5,376,790 A ist ein Rastersondenmikroskop beschrieben, das einen auswechselbaren Messkopf mit einem Cantilever hat. Abhängig von einer zu untersuchenden Probe biegt sich der Cantilever. Um die Biegung des Cantilevers zu bestimmen, weist das Mikroskop außerdem eine Laserdiode und einen ortsauflösenden Lichtempfänger auf. Die Laserdiode emittiert einen Lichtstrahl auf die Rückseite des Cantilevers. Dort wird der Lichtstrahl reflektiert und von dem ortsauflösenden Lichtempfänger gemessen. Abhängig von der Position, an der der ortsauflösende Lichtempfänger vom reflektierten Lichtstrahl getroffen wird, kann auf die Biegung des Cantilevers geschlossen werden.

Gegenstand von DE 197 21 105 A1 ist ein optoelektronischer Sensor mit einem Lichtsender zum Aussenden von Sendelicht in einen Überwachungsbereich und mit einem Mehrelement-Lichtsensor zum Empfangen von Empfangslicht, das durch das von einem Gegenstand im Überwachungsbereich reflektierte Sendelicht gebildet ist. Das Empfangslicht erreicht den Lichtsensor abhängig vom Abstand des Gegenstands in einem veränderlichen Strahlwinkel und trifft dementsprechend auf ein bestimmtes Element des Mehrelement-Lichtsensors. Abhängig davon, welches Element des Mehrelement-Lichtsensors vom Empfangslicht getroffen wird, kann auf den Abstand des Gegen-stands geschlossen werden.

In US 2006/0050263 A1 ist ein optisches Entfernungsmessgerät mit einer Mehrzahl von LEDs beschrieben, die über eine Linse Licht in einen Überwachungsbereich emittieren. Von einem Objekt im Überwachungsbereich zurückgeworfenes Licht trifft über eine weitere Linse auf einen ortsauflösenden Lichtempfänger, wobei in Abhängigkeit von der Entfernung des Objekts eine bestimmte Stelle des ortsauflösenden Lichtempfängers getroffen wird. Um zu vermeiden, dass von den LEDs emittiertes Streulicht den ortsauflösenden Lichtempfänger erreicht, sind die LEDs von einer lichtundurchlässigen Gussform umgeben.

JP 10-170655 beschreibt ein optisches Entfernungsmessgerät mit einem Lichtsender zum Abstrahlen von Sendelicht und mit einem Lichtempfänger zum Detektieren von von einem Objekt zurückgeworfenem Sendelicht. Hierbei wird eine Laufzeit des Sendelichts gemessen und daraus eine Entfernung zwischen dem Objekt und dem Entfernungsmessgerät berechnet. Damit kein Streulicht des Lichtsenders den Lichtempfänger erreicht, ist ein lichtundurchlässiges Element zwischen dem Lichtsender und dem Lichtempfänger angebracht.

**Aufgabe** der Erfindung ist es, einen optoelektronischen Sensor der oben genannten Art zu schaffen, bei dem der Einfluss von störendem Streulicht weitgehend reduziert ist.

Diese Aufgabe wird durch den optoelektronischen Sensor mit den Merkmalen des Anspruchs 1 gelöst.

Bevorzugte Ausführungsbeispiele des erfindungsgemäßen optoelektronischen Sensors sind Gegenstand der abhängigen Ansprüche.

Der optoelektronische Sensor der oben genannten Art ist erfindungsgemäß dadurch weitergebildet, dass der Sender auf einem Träger angeordnet ist, der zum Reduzieren von Streulicht aus einer Umgebung des Senders mit mindestens einer Ausnehmung versehen ist.

Als Kerngedanke der Erfindung kann angesehen werden, Umgebungsbereiche des Senders, welche im Hinblick auf Streulicht kritisch sind, gezielt zurückzusetzen, so dass aus diesen Bereichen die Intensität des gestreuten Lichts erheblich reduziert wird.

Als wesentlicher Vorteil der Erfindung kann angesehen werden, dass mit sehr einfachen Mitteln eine erhebliche Verminderung von Senderstreulicht und der damit verbundenen nachteiligen Effekte erreicht wird.

Beilspielsweise wurde bei optoelektronischen Sensoren der oben genannten Art ein Struktureffekt bei speziell gefärbten Fußböden festgestellt. Dieser Struktureffekt führte zu Fehlmessungen, so dass ein normgemäßer Betrieb hier nicht möglich war. Bei den Vorarbeiten, die zur Erfindung führten, wurde schließlich erkannt, dass das Streulicht des Senders die Ursache für diesen Struktureffekt darstellt und dass das Streulicht wesentlich durch das eingesetzte Gehäuse verursacht wird.

Bei einer besonders bevorzugten Ausgestaltung des erfindungsgemäßen optoelektronischen Sensors ist mindestens eine Ausnehmung als Durchbrechung des Trägers gebildet. Beispielsweise durch Herausstanzen oder Herausfräsen der entsprechenden Durchbrüche kann ein solcher Träger leicht hergestellt werden.

Eine größere mechanische Stabilität des Trägers kann erzielt werden, wenn mindestens eine Ausnehmung nur als Vertiefung im Träger gebildet ist. Dies kann ebenfalls durch Fräsen erreicht werden.

Wenn unterdrückt werden soll, dass Hintergrundstrukturen als Vordergrundobjekt detektiert werden, muss der zwischen Sender und Empfänger an den Sender angrenzende Bereich des Trägers ausgespart werden. Die Ausnehmung ist demgemäß im Bereich zwischen dem Sender und dem Empfänger gebildet.

Wenn andererseits gefordert ist, dass ein Objekt durch den Struktureffekt nicht als Hintergrund erscheinen soll, muss der vom Empfänger weg weisende, an das Sendebauteil angrenzende Bereich des Trägers ausgespart werden. Bei dieser Variante ist die Ausnehmung entsprechend auf dem Träger neben dem Sender in einem dem Empfänger abgewandten Bereich gebildet.

Eine besonders weitgehende Unterdrückung von Streulicht erhält man, wenn auf beiden Seiten des Senders Ausnehmungen oder Aussparungen des Trägers vorgesehen sind.

Um Streulicht möglichst vollständig aus den relevanten Bereichen des Trägers im Bereich des Senders zu unterdrücken, ist es zweckmäßig, wenn eine Breite der mindestens einen Ausnehmung in einer Richtung quer zu einer Verbindungsachse zwischen Sender und Empfänger größer ist als eine Breite des Empfängers in dieser Richtung.

Grundsätzlich kann ein Triangulationssensor mit elektromagnetischer Strahlung beliebiger Wellenlänge arbeiten. Bevorzugt sind aber Ausführungsbeispiele, bei denen der Sender sichtbares und/oder Infrarotlicht aussendet.

Bei einer besonders bevorzugten Ausführungsform des erfindungsgemäßen optoelektronischen Sensors ist der Sender ein LED-Chip.

Als Träger wird dann in einfacher Weise eine Leiterplatte eingesetzt.

Bei einer kompakten Anordnung ist dabei der LED-Chip auf die Leiterplatte geklebt. Durch diese auch als "Chip-on-board"-Verfahren bezeichnete Technik kann im Zusammenwirken mit dem oben beschriebenen Kerngedanken der Erfindung eine weitere Reduzierung des Streulichts erzielt werden.

Um noch weniger streuende Objekte in der Umgebung des Senders zu haben, ist außerdem eine Variante bevorzugt, bei der der LED-Chip auf einem schmalen Steg des Trägers aufgebracht ist, der im Wesentlichen dieselbe Breite aufweist, wie der LED-Chip. Mit der Breite des Stegs, auf welchem der LED-Chip sitzt, ist hier im Wesentlichen die Ausdehnung dieses Stegs in Richtung einer Verbindungsachse zwischen Sender und Empfänger gemeint.

Die Verlustwärme des LED-Chips kann bei diesen Varianten schneller abgeführt werden, wenn die Leiterplatte im Bereich des LED-Chips mit einer Metallisierung erhöhter Dicke versehen ist.

Das Aussenden von Streulicht kann schließlich noch weiter reduziert werden, wenn ein Hintergrundbereich der Ausnehmung geschwärzt ist.

Als Empfänger können ein PSD (Position Sensitive Device) oder auch ein Mehrelementedetektor eingesetzt werden.

Weitere Vorteile und Merkmale der Erfindung werden nachstehend mit Bezug auf die beigefügten schematischen Figuren beschrieben.

### Hierin zeigt:

- Figur 1:: in einer schematischen Darstellung die Arbeitsweise eines Triangulationssensors;
- Figur 2:: in einer schematischen Darstellung die im Hinblick auf Streulicht kritischen Bereiche des optischen Sensors;
- Figur 3:: in einer schematischen Querschnittsansicht ein Ausführungsbeispiel eines Trägers für einen erfindungsgemäßen optischen Sensor;
- Figuren 4 bis 6:: weitere Ausführungsbeispiele von Trägern für erfindungsgemäße optische Sensoren; und

- Figur 7:: in einer schematischen Ansicht typische Strahlwege von Streulicht.

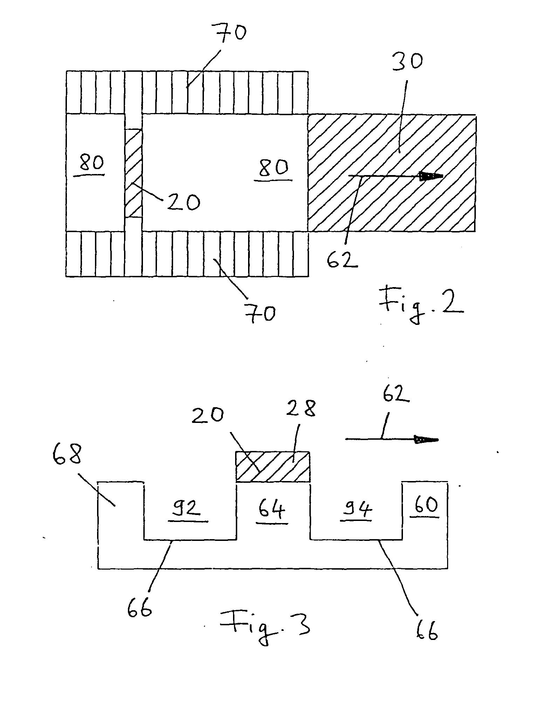

Erfindungsgemäß wurde erkannt, dass das störende Streulicht aus Umgebungsbereichen des Senders stammt. Welche Bereiche in der Umgebung des Senders als Quelle für Streulicht besonders kritisch sind, wird anhand der Figuren 1 und 2 erläutert. Der in Fig. 1 schematisch dargestellte Aufbau entspricht auch dem Aufbau eines erfindungsgemäßen optoelektronischen Sensor 100. Die Weiterentwicklung im Vergleich zum Stand der Technik bezieht sich auf den Träger, auf welchem der Sender und gegebenenfalls auch der Empfänger untergebracht ist.

Störend wirkt sich Streulicht insbesondere in den Bereichen 80 des Sensors 100 aus, da es den Intensitätsschwerpunkt in der in Figur 2 mit dem Pfeil 62 gekennzeichneten Triangulationsrichtung beeinflusst. Die Bereiche 80 des Sensors 100 werden auch als Triangulationsbereich bezeichnet. Streulicht außerhalb des Triangulationsbereichs, also außerhalb der Bereiche 80 des Sensors, beispielsweise aus den Bereichen 70, ist ohne Einfluss auf den Intensitätsschwerpunkt. Streulicht aus den Bereichen 70 kann deshalb vernachlässigt werden. Der Sender 20 befindet sich immer auf einem Träger aus festem Material, der die Umgebung bildet, aus der das Streulicht abgestrahlt wird.

Erfindungsgemäß wird vorgeschlagen, dass an den Stellen, wo in der unmittelbaren Umgebung des Senders 20 Streulicht stören würde, der den Sender 20 tragende Körper, also ein Träger 60, ausgespart wird. Hierbei sind unterschiedliche Gestaltungen möglich, die von den konkreten Anforderungen an den Triangulationssensor abhängen. Nachstehend werden hierzu einige Varianten erläutert.

Gleichwirkende Komponenten sind in den Figuren jeweils mit denselben Bezugszeichen versehen.

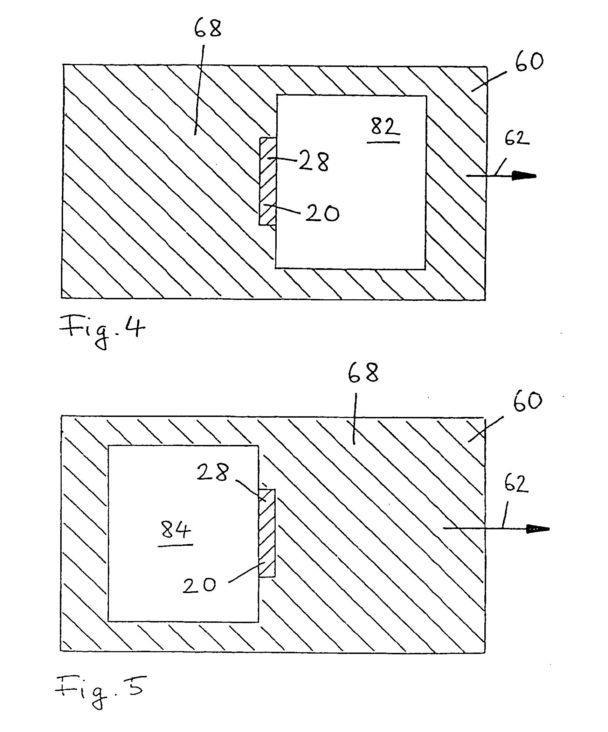

Figur 4 zeigt ein erstes Beispiel eines Trägers 60 eines erfindungsgemäßen optoelektronischen Sensors. Auf dem Träger 60 ist etwa mittig ein Sender 20 angebracht. Unmittelbar angrenzend an den Sender 20 befindet sich rechts eine Ausnehmung 82 im Träger 60. Die Ausnehmung 82 ist bei dem in Fig. 4 gezeigten Beispiel als Durchbruch 82 gebildet. Der Pfeil 62 zeigt hier wieder die Triangulationsrichtung an und weist in Richtung des in dieser Figur nicht dargestellten Empfängers 30. Bei dieser Ausführungsvariante wird Streulicht aus dem Bereich des Durchbruchs 82 unterdrückt. Streulicht aus diesem Bereich würde in Figur 1 links vom dort gezeigten Sendestrahlbündel 22 auf den Hintergrund 46 treffen und könnte somit ein Vordergrundobjekt vortäuschen. Mit dem in Figur 4 gezeigten Träger kann demnach unterdrückt werden, dass Hintergrundstrukturen als Vordergrundobjekt detektiert werden. Die Breite des Durchbruchs 82 quer zur Triangulationsrichtung 62 wird zweckmäßigerweise so gewählt, dass die obere und untere Kante der Abbildung des Durchbruchs 82 außerhalb des Empfängers 30 liegen.

Eine weitere Alternative wird mit Bezug auf Figur 5 beschrieben. Dort ist wiederum unmittelbar angrenzend an den Sender 20 eine Ausnehmung 84 an der vom Empfänger 30 wegweisenden Seite des Senders 20 vorhanden. Auch die Ausnehmung 84 ist als Durchbruch im Träger gebildet. Streulicht aus diesem Bereich würde in der in Figur 1 dargestellten Situation auf einen Beleuchtungsfleck auf dem Objekt 44 rechts von dem Beleuchtungsfleck des Sendelichtbündels 22 abgebildet werden und könnte deshalb einen Hintergrund vortäuschen, wo sich in Wirklichkeit das Objekt 44 befindet. Die Variante aus Figur 5 ist deshalb zweckmäßig, wenn gefordert ist, dass ein Objekt 44 durch den Struktureffekt nicht als Hintergrund erscheinen soll.

Eine Kombination der Lösungen aus Figur 4 und Figur 5 ist in Figur 6 dargestellt, wo sich auf beiden Seiten des Senders 20 unmittelbar angrenzend im Träger 60 Durchbrüche 82, 84 befinden. Dieses Ausführungsbeispiel ist dann sinnvoll, wenn gefordert ist, dass das Streulicht weder die Objektdetektion noch die Hintergrunddetektion stören darf. Der Träger 60 muss deshalb, wie in Figur 6 gezeigt, auf beiden Seiten ausgespart werden.

In den in den Figuren 4 bis 6 dargestellten Ausführungsvarianten handelt es sich bei dem Sender 20 bevorzugt um einen LED-Chip 28. Der Träger 60 ist zweckmäßig eine Leiterplatte 68. Bei bevorzugten Ausführungen wird der LED-Chip 28 direkt auf die Leiterplatte 68 geklebt oder gebondet, in die einseitig, wie in den Figuren 4 und 5 dargestellt, oder beidseitig, wie in Figur 6 gezeigt, in Richtung der Triangulationsrichtung 62 unmittelbar zum LED-Chip 28 benachbart Durchbrüche 82, 84 eingebracht sind. Bei beidseitigen Durchbrüchen 82, 84, wie in Figur 6 dargestellt, bildet sich zwischen den Durchbrüchen 82, 84 ein schmaler Steg aus Leiterplattenmaterial, der den LED-Chip 28 trägt und der nur eine geringe Anbindung an den Rest der Leiterplatte 68 aufweist. Insbesondere bei schmalen LED-Chips kann hierdurch eine Schwierigkeit beim Abführen der Verlustwärme entstehen. Deshalb wird vorteilhafterweise die Metallisierungsschicht der Leiterplatte, auf die der Chip gebondet ist, möglichst breit bis an den Rest oder den Rand der Leiterplatte geführt wird. Außerdem kann zweckmäßig sein, dass diese Metallisierungsschicht eine erhöhte Dicke aufweist.

Eine weitere bevorzugte Ausführungsvariante eines Trägers für einen optoelektronischen Sensor wird mit Bezug auf Figur 3 erläutert. Statt der Durchbrüche 82, 84 sind hier in die Leiterplatte 68 Vertiefungen 92, 94 eingebracht, durch welche ebenfalls eine erhebliche Reduzierung des Streulichts erzielt werden kann. Die Vertiefungen 92, 94 können typischerweise wenige Millimeter betragen. Bei besonders bevorzugten Ausgestaltungen sind Hintergrundbereiche 66 der Vertiefungen 92, 94 geschwärzt, wodurch eine Streulichtintensität aus diesen Bereichen nochmals reduziert werden kann. Bei weiteren bevorzugten Ausführungen kann der LED-Chip an die Leiterplatte oder auf einen Steg eines Chipträgers aus beliebigem Material gesetzt werden, so dass Bereiche neben dem LED-Chip einseitig oder zweiseitig frei bleiben.

Mit der vorliegenden Erfindung wird eine neuartige Senderbaugruppe für optische Triangulationssensoren bereitgestellt, bei denen ein durch Senderstreulicht verursachter Einfluss eine Oberflächenstruktur eines nachzuweisenden Objekts oder eines Hintergrunds auf die Tastweite von optischen Triangulationssensoren deutlich vermindert wird. Mit der erfindungsgemäßen Lösung kann weitestgehend verhindert werden, dass die Umgebung des Sendebauteils störendes Streulicht aussendet. Dies wird erfindungsgemäß dadurch erzielt, dass Bereiche in der Umgebung des Senders, welche als Quellen von Streulicht besonders störend sind, beseitigt werden.

## Patentansprüche

1. Triangulationssensor zum Nachweis von Objekten in einem Überwachungsbereich
mit einem Sender (20) zum Aussenden eines Sendelichtbündels (22) in den Überwachungsbereich (40),
mit einem Empfänger (30) zum Nachweis eines Empfangslichtbündels (38, 39) aus dem Überwachungsbereich, wobei das Empfangslichtbündel (38, 39) abhängig von einem Abstand des nachzuweisenden Objekts (44) von dem optoelektronischen Sensor (100) relativ zum Sendelichtbündel (22) einen veränderlichen Strahlwinkel einnimmt, und
mit einer Steuer- und Auswerteeinheit (50) zum Verarbeiten von Messdaten des Empfängers (30) und zum Ausgeben eines Schaltsignals, wenn ein Objekt (44) im Überwachungsbereich (40) erkannt wurde,
**dadurch gekennzeichnet,**
**dass** der Sender (20) auf einer Leiterplatte (68) angeordnet ist, die zum Reduzieren von Streulicht aus einer Umgebung des Senders (20) mit mindestens einer Ausnehmung (82, 84, 92, 94) versehen ist, und
**dass** die Ausnehmung (82, 84, 92, 94) als Durchbrechung (82, 84) oder Vertiefung (92, 94) in der Leiterplatte (68) gebildet ist.

2. Triangulationssensor nach Anspruch 1,
**dadurch gekennzeichnet,**
**dass** die Ausnehmung (82, 84, 92, 94) im Bereich zwischen dem Sender (20) und dem Empfänger (30) gebildet ist.

3. Triangulationssensor nach einem der Ansprüche 1 oder 2,
**dadurch gekennzeichnet,**
**dass** die Ausnehmung (82, 84, 92, 94) auf der Leiterplatte (68) neben dem Sender (20) in einem dem Empfänger (30) abgewandten Bereich gebildet ist.

4. Triangulationssensor nach einem der Ansprüche 1 bis 3,
**dadurch gekennzeichnet,**
**dass** eine Breite der mindestens einen Ausnehmung (82, 84, 92, 94) in einer Richtung quer zu einer Verbindungsachse zwischen Sender (20) und Empfänger (30) größer ist als eine Breite des Empfängers (30) in dieser Richtung.

5. Triangulationssensor nach einem der Ansprüche 1 bis 4,
**dadurch gekennzeichnet,**
**dass** mindestens eine Ausnehmung als Durchbrechung (82, 84) der Leiterplatte (68) gebildet ist.

6. Triangulationssensor nach einem der Ansprüche 1 bis 5,
**dadurch gekennzeichnet,**
**dass** mindestens eine Ausnehmung als Vertiefung (92, 94) in der Leiterplatte (68) gebildet ist.

7. Triangulationssensor nach einem der Ansprüche 1 bis 6,
**dadurch gekennzeichnet,**
**dass** der Sender (20) sichtbares und/oder Infrarotlicht aussendet.

8. Triangulationssensor nach einem der Ansprüche 1 bis 7,
**dadurch gekennzeichnet,**
**dass** der Sender (20) ein LED-Chip (28) ist.

9. Triangulationssensor nach Anspruch 8,
**dadurch gekennzeichnet,**
**dass** der LED-Chip (28) auf die Leiterplatte (68) geklebt ist.

10. Triangulationssensor nach einem der Ansprüche 8 bis 9,
**dadurch gekennzeichnet,**
**dass** der LED-Chip (28) auf einem Steg (64) der Leiterplatte (68) aufgebracht ist, der im Wesentlichen dieselbe Breite aufweist, wie der LED-Chip (28).

11. Triangulationssensor nach einem der Ansprüche 8 bis 10,
**dadurch gekennzeichnet,**
**dass** die Leiterplatte (68) im Bereich des LED-Chips (28) zur schnelleren Abführung der Verlustwärme des LED-Chips (28) mit einer Metallisierung erhöhter Dicke versehen ist.

12. Triangulationssensor nach einem der Ansprüche 1 bis 11,
**dadurch gekennzeichnet,**
**dass** ein Hintergrundbereich (66) der mindestens einen Vertiefung (92, 94) geschwärzt ist.

13. Triangulationssensor nach einem der Ansprüche 1 bis 12,
**dadurch gekennzeichnet,**
**dass** der Empfänger (30) ein PSD, Position Sensitive Device, ist.

14. Triangulationssensor nach einem der Ansprüche 1 bis 13,
**dadurch gekennzeichnet,**
**dass** der Empfänger (30) ein Mehrelementedetektor ist.

## Claims

1. Triangulation sensor for detecting objects in an observation area with a transmitter (20) for transmitting a bundle of transmitting light (22) into the observation area (40),
with a receiver (30) for detecting a bundle of receiving light (38, 39) from the observation area, the bundle of receiving light (38, 39) having a variable beam angle relative to the bundle of transmitting light (22) dependent on a distance of the object (44) to be detected from the opto-electronic sensor (100), and
with a control and evaluation unit (50) for processing measuring data of the receiver (30) and for outputting a switching signal when an object (44) is detected in the observation area (40),
**characterized in that**
the transmitter (20) is arranged on a circuit board (68) which is provided with at least one cavity (82, 84, 92, 94) for reducing stray light from a surrounding of the transmitter (20), and
the cavity (82, 84, 92, 94) is formed as an opening (82, 84) or a recess (92, 94) in the circuit board (68).

2. Triangulation sensor as claimed in claim 1,
**characterized in that**
the cavity (82, 84, 92, 94) is formed in an area between the transmitter (20) and the receiver (30).

3. Triangulation sensor as claimed in claim 1 or 2,
**characterized in that**
the cavity (82, 84, 92, 94) is formed on the circuit board (68) adjacent to the transmitter (20) in an area facing away from the receiver (30).

4. Triangulation sensor as claimed in any one of claims 1 to 3,
**characterized in that**
a width of the at least one cavity (82, 84, 92, 94) in a direction transverse to a connection axis between transmitter (20) and receiver (30) is larger than a width of the receiver (30) in this direction.

5. Triangulation sensor as claimed in any one of claims 1 to 4,
**characterized in that**
at least one cavity is formed as an opening (82, 84) of the circuit board (68).

6. Triangulation sensor as claimed in any one of claims 1 to 5,
**characterized in that**
at least one cavity is formed as a recess (92, 94) in the circuit board (68).

7. Triangulation sensor as claimed in any one of claims 1 to 6,
**characterized in that**
the transmitter (20) transmits visible and/or infrared light.

8. Triangulation sensor as claimed in any one of claims 1 to 7,
**characterized in that**
the transmitter (20) is a LED-chip (28).

9. Triangulation sensor as claimed in claim 8,
**characterized in that**
the LED-chip (28) is glued onto the circuit board (68).

10. Triangulation sensor as claimed in any one of claims 8 to 9,
**characterized in that**
the LED-chip (28) is mounted on a bridge (64) of the circuit board (68), which bridge (64) has substantially the same width as the LED-chip (28).

11. Triangulation sensor as claimed in any one of claims 8 to 10,
**characterized in that**
the circuit board (68) is provided in the area of the LED-chip (28) with a metallization of increased thickness for faster dissipation of the waste heat of the LED-chip (28).

12. Triangulation sensor as claimed in any one of claims 1 to 11,
**characterized in that**
a background area (66) of the at least one recess (92, 94) is blackened.

13. Triangulation sensor as claimed in any one of claims 1 to 12,
**characterized in that**
the receiver (30) is a PSD, Position Sensitive Device.

14. Triangulation sensor as claimed in any one of claims 1 to 13,
**characterized in that**
the receiver (30) is a multi element detector.

## Revendications

1. Capteur de triangulation pour détecter des objets dans une zone de surveillance
avec un émetteur (20) pour émettre un faisceau lumineux d'émission (22) dans la zone de surveillance (40),
avec un récepteur (30) pour détecter un faisceau lumineux de réception (38, 39) venant de la zone de surveillance, le faisceau lumineux de réception (38, 39) formant, en fonction d'une distance de l'objet (44) à détecter depuis le capteur optoélectronique (100), un angle de parcours variable par rapport au faisceau lumineux d'émission (22), et
avec une unité de commande et d'analyse (50) pour traiter des données de mesure du récepteur (30) et délivrer un signal de commutation quand un objet (44) a été détecté dans la zone de surveillance (40),
***caractérisé***
***en ce que*** l'émetteur (20) est placé sur un circuit imprimé (68) qui, pour réduire la lumière diffusée depuis un environnement de l'émetteur (20), est muni d'au moins un évidement (82, 84, 92, 94), et
***en ce que*** l'évidement (82, 84, 92, 94) est réalisé en traversée (82, 84) ou en renfoncement (92, 94) dans le circuit imprimé (68).

2. Capteur de triangulation selon la revendication 1, ***caractérisé en ce que*** l'évidement (82, 84, 92, 94) est formé dans la zone située entre l'émetteur (20) et le récepteur (30).

3. Capteur de triangulation selon l'une quelconque des revendications 1 ou 2, ***caractérisé* en *ce que*** l'évidement (82, 84, 92, 94) est formé sur le circuit imprimé (68) à côté de l'émetteur (20) dans une zone opposée au récepteur (30).

4. Capteur de triangulation selon l'une quelconque des revendications 1 à 3, ***caractérisé* en ce qu'**une largeur dudit au moins un évidement (82, 84, 92, 94) dans une direction transversale à un axe joignant l'émetteur (20) au récepteur (30) est supérieure à une largeur du récepteur (30) dans cette direction.

5. Capteur de triangulation selon l'une quelconque des revendications 1 à 4, ***caractérisé en ce qu*'**au moins un évidement est réalisé en traversée (82, 84) dans le circuit imprimé (68).

6. Capteur de triangulation selon l'une quelconque des revendications 1 à 5, ***caractérisé en ce* qu'**au moins un évidement est réalisé en renfoncement (92, 94) dans le circuit imprimé (68).

7. Capteur de triangulation selon l'une quelconque des revendications 1 à 6, ***caractérisé en ce que*** l'émetteur (20) émet de la lumière visible et/ou infrarouge.

8. Capteur de triangulation selon l'une quelconque des revendications 1 à 7, ***caractérisé en ce que*** l'émetteur (20) est une puce DEL (28).

9. Capteur de triangulation selon la revendication 8, ***caractérisé en ce que*** la puce DEL (28) est collée sur le circuit imprimé (68).

10. Capteur de triangulation selon l'une quelconque des revendications 8 à 9, **ca*ractérisé en ce que*** la puce DEL (28) est placée sur une barrette (64) du circuit imprimé (68) qui présente pour l'essentiel la même largeur que la puce DEL (28).

11. Capteur de triangulation selon l'une quelconque des revendications 8 à 10, ***caractérisé en ce que*** le circuit imprimé (68) est muni, au niveau de la puce DEL (28), d'une métallisation d'épaisseur accrue afin d'accélérer l'évacuation des pertes caloriques de la puce DEL (28).

12. Capteur de triangulation selon l'une quelconque des revendications 1 à 11, ***caractérisé en ce qu*'**une zone d'arrière-plan (66) dudit au moins un renfoncement (92, 94) est noircie.

13. Capteur de triangulation selon l'une quelconque des revendications 1 à 12, ***caractérisé en ce que*** le récepteur (30) est un PSD, Position Sensitive Device (dispositif détecteur de position).

14. Capteur de triangulation selon l'une quelconque des revendications 1 à 13, **ca*ractérisé en ce que*** le récepteur (30) est un récepteur à éléments multiples.
